# NOUVEAU FASCICULE DE BREVET EUROPEEN

(11) **EP 1 041 010 B2**
(45) Date de publication et mention de la décision concernant l'opposition: **15.08.2007**
(45) Mention de la délivrance du brevet: 28.05.2003
(21) Numéro de dépôt: 00400885.0
(22) Date de dépôt: 30.03.2000
(51) Int. Cl.: B65D 81/20, B65D 85/76

(54) **Procédé et système de conditionnement de fromages à croûte naturelle mixte**
Verfahren und Anordnung zur Verpackung von Käse mit gemischter natürlicher Rinde
Method and system for packaging cheese with natural mixed rind

(30) Priorité: 01.04.1999 FR 9904102
(43) Date de publication de la demande: 04.10.2000
(73) Titulaire: FROMAGERIES BEL, 75008 Paris (FR)
(72) Inventeur: Roger, Bruno, 41160 Vendôme (FR)
(74) Mandataire: Jacobson, Claude

(56) Documents cités:
- EP-A- 0 153 215
- EP-A- 0 351 115
- EP-A- 0 351 116
- EP-A- 0 752 378
- WO-A-99/12825
- FR-A- 1 397 270
- FR-A- 2 049 237
- FR-A- 2 198 700
- FR-A- 2 517 279
- FR-A- 2 617 811
- US-A- 5 045 331
- STEHLE: "conditionnement des fromages a pates molles" LA TECHNIQUE LAITIERE, no. 999, juin 1985 (1985-06), pages 25-29, XP002124161

## Description

L'invention concerne un nouveau procédé et un nouveau système de conditionnement pour fromages ou spécialités fromagères à croûte naturelle, et plus particulièrement des fromages à croûte naturelle mixte.

Par "fromages à croûte mixte", on entend des fromages dont la croûte est formée par le développement d'au moins deux microorganismes d'affinage différents, pendant un temps nécessaire au développement des caractéristiques organoleptiques et de texture désirées.

Dans le cas de la présente invention, l'association de microorganismes utilisée pour la réalisation de cette croûte est plus particulièrement constituée de moissisures, notamment des genres *Geotrichum, Penicillium, Fusarium* et *Cylindrocarpon,* de levures, notamment du genre *Debaryomyces* et de bactéries appartenant à la famille des corynébactéries ( plus spécifiquement *Brevibacterium linens)* et au genre micrococcus.

Actuellement, les fromages à croûte naturelle mixte sont conditionnés sous différentes présentations (boîtes, emballages complexes mis en oeuvre par pliage, cloche, etc) et différents matériaux : bois, carton, papier paraffiné associé à une pellicule cellulosique, polypropylène, pellicule perforée, aluminium, etc.... .

Ces types de conditionnement permettent une durée de conservation après emballage des produits pendant 30 à 49 jours selon les produits.

Par ailleurs, la conservation des produits alimentaires et plus particulièrement des fromages a fait l'objet de nombreuses études qui ont permis de comprendre certains phénomènes physiques, chimiques et biologiques essentiels.

L'article intitulé "conditionnement des fromages à pâtes molles", publié en juin 1985 par Gerd STEHLE paru dans le N°999 de la revue LA TECHNIQUE LAITIERE est particulièrement instructif. Il en ressort qu'une bonne conservation des fromages implique un choix convenable de la perméabilité de l'emballage au gaz, spécialement à l'oxygène, à la vapeur d'eau, au gaz carbonique et à l'ammoniac.

Cependant, aucun des emballages décrit à ce jour ne permet la conservation des fromages dans des conditions optimales.

FR 1 397 270 décrit un emballage pour produits alimentaires, notamment pour fruits et légumes, formé d'un film en matière synthétique permettant d'obtenir à l'intérieur de l'emballage, le rapport entre la pression d'oxygène et la pression de gaz carbonique assurant la bonne conservation des fruits et légumes.

EP 0 153 215 propose d'améliorer la conservation des produits alimentaires en les plaçant dans des emballages imperméables au gaz. Après avoir fait le vide dans l'emballage, on y injecte un mélange gazeux constitué de quantités substantielles d'anhydride carbonique et d'azote. L'anhydride carbonique produit un effet bactériostatique et l'azote un effet antioxydant (substitution à l'oxygène).

FR 2 198 700 enseigne la conservation de produits agricoles (fruits ou légumes) en les plaçant dans des sacs munis de fenêtres à perméabilité sélective, initialement remplis d'un gaz inerte, le tout étant placé dans un caisson contenant une atmosphère modifiée.

FR 2 049 237 décrit une boîte pour le conditionnement de fromages, en matière plastique permettant la circulation de l'air à l'intérieur de la boîte et avec l'extérieur.

FR 2 517 279 décrit une boîte destinée à la conservation de produits sensibles à la déshydratation, tels que les laitues, qui permet de conserver ces produits dans une atmosphère à forte pression partielle de vapeur d'eau sans qu'ils soient en contact avec l'eau liquide.

Enfin, FR 2 617 811 décrit un emballage qui permet la poursuite de l'affinage des fromages à croûte naturelle fleurie dans des conditions améliorées. A cet effet, la boîte permet la circulation de l'air autour du fromage et l'échange de vapeur d'eau avec l'extérieur, la boîte étant fermée par scellage et constituée d'un matériau étanche, muni de fenêtres recouvertes de membranes à perméabilité sélective permettant un apport d'air venant de l'extérieur en quantité contrôlée.

Le réglage des échanges entre le produit et l'extérieur se fait par l'intermédiaire de ces membranes à perméabilité sélective. Toutefois, aucune indication précise n'est donnée ni sur l'environnement gazeux autour du fromage, ni sur la quantification des échanges, ni sur les perméabilités sélectives correspondantes des membranes.

Ainsi, la description ne précise à aucun moment les caractéristiques du matériau utilisé excepté dans l'exemple particulier. Toutefois, dans cet exemple, le type de conditionnement décrit ne permet pas d'assurer une bonne conservation de la flore (survie sans altération) . En effet, les valeurs de perméabilité nécessaires au maintien optimal de la flore, compte tenu de la superficie des fenêtres se situent dans des gammes de valeur ne correspondant ni à des valeurs mesurables par les méthodes et appareillage connus de l'homme de métier, ni à aucun matériau connu.

Par ailleurs, le document ne donne des informations que pour les fromages dont la croûte naturelle est fleurie et obtenue par développement exclusif de *Pénicillium.*

L'objectif de la présente invention est de proposer un système de conditionnement qui permet de maintenir les concentrations gazeuses optimales pour l'évolution de la flore de surface de fromages ou spécialités fromagères à croûte naturelle et ainsi d'augmenter la fenêtre de commercialisation des produits tout en maintenant leurs qualités organoleptiques et leur présentation à l'optimum.

Dans la présente invention, on entend par "évolution" de la flore, sa stabilisation et sa survie sans altération ni destruction importante des microorganismes la constituant, ce qui signifie le maintien d'un développement minimum de cette flore et exige un environnement gazeux approprié.

Les travaux des inventeurs ayant conduit à la présente invention ont permis de déterminer les conditions gazeuses optimales permettant une évolution optimale d'une flore mixte de fromages ou spécialités fromagères à croûte fleurie, lorsque cette flore est constituée d'au moins deux microorganismes choisis dans au moins deux groupes différents parmi les moisissures, les levures et les bactéries corynéformes ou appartenant au genre Micrococcus.

L'invention a ainsi pour objet un procédé pour conditionner des fromages ou des spécialités fromagères à croûte naturelle mixte obtenue par le développement d'une flore d'affinage constituée par l'association d'au moins deux microorganismes différents, l'un étant une bactérie choisie dans le groupe des bactéries corynéformes et des microcoques, l'autre étant choisi parmi les moisissures et les levures, caractérisé en ce que l'on place le fromage ou la spécialité fromagère dans une enceinte hermétiquement close comprenant sur tout ou partie de sa surface un matériau à perméabilité sélective assurant un flux gazeux avec l'atmosphère extérieure de manière à constituer et maintenir autour du fromage ou de la spécialité fromagère une atmosphère comprenant de 2 à 13 % en volume d'O₂ et de 7 à 20 % en volume de CO₂ pendant toute la durée de conservation du fromage ou de la spécialité fromagère.

Le groupe des moisissures est avantageusement constitué par les genres *Geotrichum, Penicillium, Fusarium* et *Cylindrocarpon,* les espèces préférées étant *Pénicillium camemberti, Geotrichum candidum, Fusarium tabacinum* et *Cylindrocarpon heteronema.*

Les levures sont avantageusement choisies parmi les levures du genre *Debaryomyces,* une espèce particulièrement préférée étant *Debaryomyces hansenii.*

Les bactéries sont avantageusement choisies parmi *Brevibacterium linens* et *Micrococcus roseus.*

Le procédé de l'invention convient tout particulièrement aux flores constituée par l'association de deux microorganismes ou plus tels que définis ci-dessus dont l'un est une levure appartenant au genre *Debaryomyces,* notamment *Debaryomyces hansenii,* l'autre étant choisi parmi les moisissures et les bactéries corynéformes ou appartenant au gerre microccocus.

Il est connu que les conditions d'environnement donné permettant à la flore superficielle d'affinage de se maintenir sans altération sont liées au type de microorganismes ou d'association de microorganismes constitutifs de cette flore, chaque microorganisme ou chaque association se caractérisant par une intensité respiratoire spécifique dépendant de son stade physiologique et du substrat sur lequel il est implanté.

Cette intensité respiratoire se caractérise par une consommation en O₂ et par une production de CO₂ que les inventeurs ont quantifié dans le but de déterminer les concentrations gazeuses optimales devant régner au sein de l'emballage .

On peut citer à titre d'exemple des intensités respiratoires (IR) d'une flore constituée uniquement de *Penicillium* implantée sur un fromage à pâte molle minéralisée de format coulommiers qui sont les suivantes :
- IR en O₂ : 0,48 (exprimée en cm³/cm² de flore pour 24h) ;
- IR en CO₂ : 0,46 (exprimée en cm³/cm² de flore pour 24h) ;

La méthode ayant permis le calcul des IR est décrite dans la publication de B. Roger et al.: "Le Lait" (1998, 78, n°2, p.241-250)

Pour assurer la conservation optimale du fromage et notamment augmenter la fenêtre de commercialisation, chaque microorganisme constitutif de la flore d'affinage doit trouver dans son environnement proche des concentrations optimales en composés gazeux nécessaires à son métabolisme, notamment en O₂ et CO₂ lui permettant de satisfaire ses besoins physiologiques et métaboliques.

Les inventeurs ont cherché à maintenir des concentrations gazeuses optimales par régulation du flux d'échanges gazeux entre le produit fromager et son environnement dans lequel il est conservé généralement l'air au travers du matériau étanche utilisé pour l'enceinte de son conditionnement. Ce flux est fonction de la surface active de la flore et de celle de l'emballage ainsi que de l'intensité respiratoire de la flore.

Pour établir au sein de l'enceinte de conditionnement les concentrations en O₂ et CO₂ de l'invention, les inventeurs ont déterminé que ce flux pouvait être établi et maintenu de manière avantageuse par le choix d'une enceinte hermétique, constituée totalement ou en partie par au moins un matériau synthétique approprié ayant des caractéristiques de perméabilité choisies en fonction de la surface active de la flore et de la surface du matériau à perméabilité sélective utilisé.

A l'équilibre, la perméabilité du matériau actif (à perméabilité sélective) est directement proportionnelle à la surface de la flore.

Pour la détermination précise des concentrations gazeuses optimales qui doivent être établies et maintenues dans l'enceinte hermétiquement close de l'invention, en fonction du type de flore mixte considérée, on procède en deux étapes :

Dans un premier temps, on quantifie les intensités respiratoires en O₂ et CO₂ de la flore selon le protocole décrit par Roger et al, paru dans "Le lait" (1998).

Dans un second temps, on définit expérimentalement les conditions optimales de concentrations gazeuses nécessaires en ces deux composés permettant la stabilisation et la survie de ladite flore pour en déduire les caractéristiques de perméabilité de la surface de matériau actif utilisé pour le système de conditionnement de l'invention qui est dépendant de la nature de la superficie de la flore.

La détermination des concentrations gazeuses optimales à la survie de la flore se réalise comme suit :

Les fromages, au stade présumé de l'emballage sont placés dans des enceintes étanches aux gaz où le niveau des concentrations gazeuses en CO₂ et en O₂ est volontairement maintenu à des niveaux fixes et prédéterminés pendant les sept semaines de conservation au froid par injection régulière d'un mélange gazeux.

Les fromages sont analysés et examinés à différents stades de la conservation par analyse sensorielle, analyse physico-chimique du fromage, analyse microbiologique de la flore de surface et colorimétrie de cette flore. Les conditions gazeuses optimales sont déterminées en identifiant les produits correspondant le plus à l'objectif prédéfini qualificatif (qualité organoleptique, présentation) pendant sept semaines minimum de conservation.

Des matériaux à perméabilité sélective permettant d'assurer et de maintenir autour des fromages une atmosphère telle que définie précédemment sont décrits dans l'art antérieur, notamment EP 0 351 115 et 0 315 111.

De manière générale, pour établir et maintenir les concentrations spécifiques en O₂ et CO₂ de l'invention au sein de l'enceinte de l'invention, les matériaux ont une perméabilité à l'oxygène et à l'anhydride carbonique inférieure à 2 000 000 cm³/m²/24 heures/atm et supérieure à 5 000 cm³/m²/24 heures/atm mesurées à 25°C.

De manière avantageuse, la perméabilité à l'O₂ et au CO₂ est comprise entre 5 000 et 200 000 cm³/m²/24 heures/atm, mesurée à 25°C.

De manière générale, la perméabilité à la vapeur d'eau de ces matériaux est avantageusement inférieure à 800 g/m²/24 heures/atm et supérieure à 1 g/m²/24 heures/atm mesurée à 25°C.

Conformément à l'enseignement de EP 351 115 et EP 351 116, la perméabilité à l'O₂ et au CO₂ d'un matériau polymère synthétique est réglée pour un matériau donné par des microperforations dont le diamètre varie entre 20 µm, voire moins et 100 µm, et est avantageusement compris entre 40 et 60 µm, et dont la densité varie entre 10 perforations et 1000 perforations par m² de surface de film constituant le matériau à perméabilité sélective.

La perméabilité à la vapeur d'eau est fonction du type de matériau polymère choisi.

Les films sont avantageusement dans des matières synthétiques telles que la cellulose ou cellulose modifiée, les homo et copolymères d'oléfine, le cas échéant avec de l'acétate de vinyle ou de l'acrylate de méthyle, les polyesters, polyamides et polycarbonates.

Les films peuvent être monocouche ou multicouche, souples, rigides ou scellables. Leur épaisseur varie généralement entre 5 et 300 µm.

Dans un premier mode de réalisation selon l'invention, la flore de surface est constituée par l'association de *Geotrichum candidum,* de *Debaryomyces hansenii* et d'une ou plusieurs souches de corynébactéries, et l'atmosphère est constituée de 9 à 11 %, avantageusement 9,5 à 10,5 % en volume d'O₂ et de 9 à 11 %, avantageusement 9,5 à 10,5 % en volume de CO₂.

Dans un second mode de réalisation, la flore de surface est constituée par l'association de *Fusarium tabacinum,* de *Debaryomyces hansenii* et éventuellement d'une ou plusieurs souches de corynébactéries et/ou microcoques, et l'atmosphère est constituée de 2 à 5 % en volume d'O₂ et de 19 à 21 %, de préférence 19,5 à 20,5 % en volume de CO₂.

Dans un troisième mode de réalisation, la flore de surface est constituée par l'association de *Pénicillium camemberti* et de *Debaryomyces hansenii* et éventuellement d'une ou plusieurs souches de corynébactéries et/ou microcoques, et l'atmosphère est constituée de 5 à 10 % en volume d'O₂ et de 9 à 11 %, de préférence 9,5 à 10,5 % en volume de CO₂.

Pour établir et maintenir les concentrations en O₂ et CO₂ définies ci-dessus, l'enceinte hermétiquement close peut en totalité ou en partie seulement comporter un matériau à perméabilité sélective.

Dans le cas où l'enceinte est en partie seulement constituée d'un matériau à perméabilité sélective, les systèmes de conditionnement préférés sont ceux constitués par une partie inférieure notamment un fond en un matériau pratiquement imperméable aux gaz (O₂, CO₂, N₂ et H₂O) et une partie supérieure, notamment un opercule ou une cloche en un matériau à perméabilité sélective, la perméabilité du matériau étant alors directement liée à la superficie de l'opercule.

Lorsque la surface de matériau à perméabilité sélective est importante, on choisit avantageusement des matériaux dont les caractéristiques de perméabilité se situent dans les limites inférieures de la gamme décrite, donc comportant des perforations de faible diamètre, et avantageusement une densité de perforation faible par unité de surface.

Inversement, lorsque la surface de matériau à perméabilité sélective est peu importante, on choisit avantageusement des matériaux dont les caractéristiques de perméabilité se situent dans les limites supérieures de la gamme décrite, donc comportant des perforations de gros diamètre, et/ou une densité de perforation élevée par unité de surface.

L'invention a également pour objet un système de conditionnement contenant un fromage ou une spécialité fromagère à croûte naturelle mixte obtenue par le développement d'une flore d'affinage constituée par l'association d'au moins deux microorganismes différents, l'un étant une bactérie choisie dans le groupe des bactéries corynéformes et des microcoques, l'autre étant choisi parmi les moisissures et les levures, caractérisé en ce que le système de conditionnement est constitué par une enceinte hermétiquement close comprenant sur tout ou partie de sa surface un matériau à perméabilité sélective assurant un flux gazeux avec l'atmosphère extérieure de manière à constituer et maintenir autour du fromage ou de la spécialité fromagère une atmosphère comprenant de 2 à 13 % en volume d'O₂ et de 7 à 20 % en volume de CO₂ pendant toute la durée de conservation du fromage ou de la spécialité fromagère.

Dans un premier mode de réalisation, le système de conditionnement est constitué en totalité d'un matériau à perméabilité sélective et consiste avantageusement en un sachet scellé par thermoscellage après introduction du fromage.

Dans un second mode de réalisation, le système de conditionnement est constitué en partie seulement d'un matériau à perméabilité sélective, l'autre partie étant constituée par un matériau imperméable aux gaz.

Dans ce dernier cas, une variante particulièrement avantageuse comprend une partie formant fond, notamment une barquette en un matériau thermoplastique imperméable aux gaz et une partie formant couvercle, notamment un opercule ou une cloche en un matériau thermoplastique à perméabilité sélective telle que définie ci-dessus.

L'une des parties formant fond ou couvercle comprend avantageusement un matériau thermoscellable de sorte qu'après introduction du fromage dans la barquette et positionnement du couvercle, les deux parties sont scellées par application d'une température suffisante pour réaliser une fermeture hermétique.

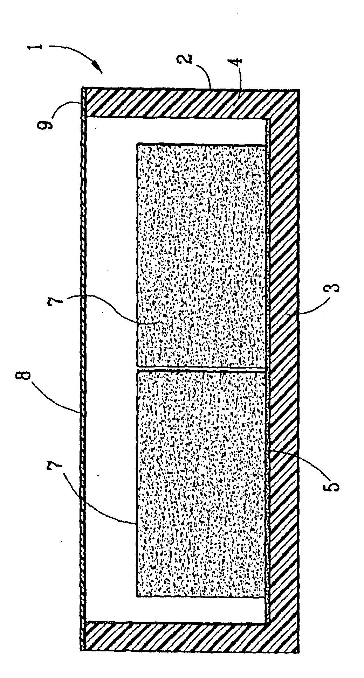

La figure annexée représente une vue en coupe transversale d'un fromage conditionné grâce à un moyen de conditionnement selon l'invention formé d'une barquette et d'un opercule.

Le moyen de conditionnement 1 est formé d'une partie inférieure en forme de cylindre, formant une barquette 2. La barquette 2 comprend un fond 3 et des parois latérales 4 en un matériau plastique rigide imperméable au gaz, consistant en un complexe polystyrène/copolymère éthylène et alcool vinylique/polyéthylène. L'épaisseur du fond 3 et des parois latérales 4 est de 300 µm. Sur le fond 3 de la barquette 2, est disposée une feuille 5 en un matériau absorbant l'humidité, par exemple du papier.

Sur la feuille 5, est déposé un fromage entier ou découpé en portions. Dans le mode de réalisation représenté ici, le moyen de conditionnement comprend un fromage à pâte pressée et à croûte mixte, de forme cylindrique découpé en six portions égales 7.

Les dimensions du fromage sont sensiblement inférieures à celles du moyen de conditionnement, afin d'aménager entre le fromage et le moyen de conditionnement un espace suffisant pour garantir une circulation de gaz suffisante du maintien de la flore.

Le moyen de conditionnement comprend également une partie supérieure, formée comme représenté ici d'un opercule 8 en un matériau plastique souple thermoscellable ayant une perméabilité à l'O₂ et au CO₂ comprise entre 5 000 cm³/m²/24 heures/atm et 200 000 cm³/m²/atm, par exemple un complexe polyéthyléne terephtalate/polyéthylène ayant subi un traitement approprié pour lui conférer les perméabilités appropriées au CO₂ et à l'O₂ (microperforations de la taille et densité définies).

L'opercule 8 est fixé par sa périphérie 9 sur le bord supérieur des parois latérales 4 de la barquette 2 par thermoscellage.

Le fromage ainsi conditionné peut être conservé dans des conditions optimales pour l'évolution de sa flore de surface pendant une durée allant jusqu'à 10 semaines, à savoir deux semaines supplémentaires par rapport à la durée de conservation dans un emballage traditionnel.

Les exemples suivants sont destinés à illustrer l'invention sans la limiter.

### EXEMPLES

### EXEMPLE 1 :

Le fromage est à pâte molle et à croûte mixte de 220 g environ et de forme parallélipidique.

L'extrait sec de ce fromage est, à l'emballage, de 51 %, son pH de 5, sa concentration en NaCI de 1,3 % et son taux de matière grasse sur matière sèche de 52 %.

Sa surface recouverte par la flore est de 220 cm². La flore est constituée d'une levure du genre *Debaryomyces hansenii,* d'un *Geotrichum candidum* et de plusieurs souches de bactéries corynéformes, dont *Brevibacterium linens.*

L'activité respiratoire de la flore est de :
- consommation d'O₂ : 0,3 cm³/m² de flore/24 heures ;
- production de CO₂ : 0,3 cm³/m² de flore/24 heures.

Le fromage est emballé après 9 jours d'affinage en hâloir, dans un sachet ("flow-pack"), parfaitement scellé ayant une surface de 600 cm². Le matériau du sachet est constitué d'un complexe polypropylène/polyéthylène de 25 µm d'épaisseur. Ce complexe a subi un traitement lui conférant une perméabilité aux gaz, dans les gammes ci-dessous définies, adaptée au maintien de l'atmosphère gazeuse dans l'emballage.

La perméabilité à l'O₂ de cet emballage est de 30 000 cm³/m²/24 heures/atm (mesurée selon les conditions normalisées à 23°C, HR = 50 %).

La perméabilité au CO₂ de cet emballage est de 30 000 cm³/m²/24 heures/atm (mesurée selon les conditions normalisées à 23°C, HR = 50 %).

La perméabilité à la vapeur d'eau de cet emballage est de 1 g/m²/24 heures (mesurée selon les conditions normalisées à 38°C, delta HR = 90 %).

Après conditionnement, un équilibre gazeux s'établit au sein de l'emballage sous l'action de la respiration de la flore et du transfert à travers le contenant (emballage) après environ 48 heures. Ces concentrations en O₂ et CO₂ atteignent environ 10% et sont optimales pour la poursuite de l'affinage du produit dans l'emballage pendant le stockage au froid à 4°C.

Par rapport à un système de conditionnement traditionnel d'un fromage (pliage du fromage dans un pellicule cellulosique) ayant les mêmes caractéristiques de flore et une surface active identique de 220 cm², l'augmentation de la fenêtre de commercialisation est de 2 semaines et la perte de poids est diminuée de 50 à 100 %.

### EXEMPLE 2 :

Des tranches de fromage à pâte pressée et à croûte mixte de 33g environ et de forme parallélipidique sont découpées à partir d'un pain de fromage de 2 kg.

L'extrait sec de ce fromage est, à l'emballage, de 54,5 %, son pH de 5,68 et sa concentration en NaCl de 1,7 %.

La surface d'une tranche recouverte par la flore de surface est de 16 cm². La flore est constituée d'une levure du genre *Debaryomyces hansenii,* d'une souche de *fusarium tabacinum* et de plusieurs souches de bactéries corynéformes, dont *Brevibacterium linens.*

L'activité respiratoire de la flore est de :
- consommation d'O₂ : 0,35 cm³/m² de flore/24 heures ;
- production de CO₂ : 0,38 cm³/m² de flore/24 heures.

Le fromage est affiné 21 jours en hâloir, puis découpé en tranches à l'aide d'une trancheuse mécanique. Chaque tranche de 33 g est recouverte par la flore de surface sur une surface de 16 cm². Six tranches ainsi obtenues sont conditionnées dans une barquette recouverte d'un opercule. La barquette est constituée d'un complexe polystyrène/copolymère éthylène et alcool vinylique/polyéthylène de 300 µm d'épaisseur imperméable aux gaz. L'opercule est constitué d'un complexe polyéthylène téréphtalate/polyéthylène de 60 µm. La surface de l'opercule est de 212 cm².

La perméabilité à l'O₂ de cet emballage final conférée par l'opercule est de 20 000 cm³/m²/24 heures/atm (mesurée selon les conditions normalisées à 23°C, HR = 50 %).

La perméabilité au CO₂ de cet emballage final conférée par l'opercule est de 20 000 cm³/m²/24 heures/atm (mesurée selon les conditions normalisées à 23°C, HR = 50 %).

La perméabilité à la vapeur d'eau de cet emballage est de 1 g/m²/24 heures (mesurée selon les conditions normalisées à 38°C, delta HR = 90 %).

Après conditionnement, un équilibre gazeux s'établit au sein de l'emballage sous l'action de la respiration de la flore et du transfert à travers le contenant (emballage). Ces concentrations en O₂ comprises entre 2 et 3 % et en CO₂ proche de 20 % sont optimales pour la poursuite de l'affinage du produit dans l'emballage pendant le stockage au froid à 4°C.

### EXEMPLE 3 :

Un fromage à pâte molle et à croûte mixte de 200 g environ et de forme cylindrique, ayant un extrait sec, à l'emballage, de 51,3 %, un pH de 5,5 et un taux de matière grasse sur matière sèche de 50 %, est recouvert par une flore dont la surface est de 200 cm². La flore est constituée d'une levure du genre *Debaryomyces hansenii,* d'une souche de *Penicillium camemberti* et de plusieurs souches de bactéries corynéformes, dont *Brevibacterium linens..*

L'activité respiratoire de la flore est de :
- consommation d'O₂ : 0,5 cm³/m² de flore/24 heures ;
- production de CO₂ : 0,42 cm³/m² de flore/24 heures.

Le fromage est emballé après 10 jours d'affinage en hâloir, dans un sachet ("flow-pack"), parfaitement scellé ayant une surface totale de 800 cm². Le matériau du sachet est constitué d'un complexe polypropylène/polyéthylène de 25 µm d'épaisseur.

La perméabilité à l'O₂ de cet emballage est de 20 000 cm³/m²/24 heures/atm (mesurée selon les conditions normalisées à 23°C, HR = 50 %).

La perméabilité au CO₂ de cet emballage est de 20 000 cm³/m²/24 heures/atm (mesurée selon les conditions normalisées à 23°C, HR = 50 %).

La perméabilité à la vapeur d'eau de cet emballage est de 1 g/m²/24 heures (mesurée selon les conditions normalisées à 38°C, delta HR = 90 %).

Après conditionnement, un équilibre gazeux s'établit au sein de l'emballage sous l'action de la respiration de la flore et du transfert à travers le contenant (emballage). Ces concentrations en O₂ d'environ 5% et CO₂ d'environ 12 % sont optimales pour la poursuite de l'affinage du produit dans l'emballage pendant le stockage au froid à 4°C.

## Revendications

1. Procédé pour conditionner des fromages ou des spécialités fromagères à croûte naturelle mixte obtenue par le développement d'une flore d'affinage constituée par l'association d'au moins deux microorganismes différents, l'un étant une bactérie choisie dans le groupe des bactéries corynéformes et des microcoques, l'autre étant choisi parmi les moisissures et les levures, **caractérisé en ce que** l'on place le fromage ou la spécialité fromagère dans une enceinte hermétiquement close comprenant sur tout ou partie de sa surface un matériau à perméabilité sélective assurant un flux gazeux avec l'atmosphère extérieure de manière à constituer et maintenir autour du fromage ou de la spécialité fromagère une atmosphère comprenant de 2 à 13 % en volume d'O₂ et de 7 à 20 % en volume de CO₂ pendant toute la durée de conservation du fromage ou de la spécialité fromagère.

2. Procédé selon la revendication 1, **caractérisé en ce que** les moisissures sont choisies parmi *Geotrichum, Penicillium, Fusarium* et *Cylindrocarpon.*

3. Procédé selon la revendication 2, **caractérisé en ce que** les moisissures sont choisis parmi les espèces *Penicillium camemberti, Geotrichum candidum, Fusarium tabacinum* et *Cylindrocarpon heteronema.*

4. Procédé selon l'une des revendications 1 à 3, **caractérisé en ce que** la levure est du genre *Debaryomyces,* notamment *Debaryomyces hansenii.*

5. Procédé selon l'une des revendications 1 à 4, **caractérisé en ce que** la corynébactérie est *Brevibacterium linens.*

6. Procédé selon l'une quelconque des revendications 1 à 5, **caractérisé en ce que** l'un des microorganismes constituant la flore est une levure du genre *Debaryomyces,* avantageusement *Debaryomyces hansenii,* l'autre étant choisi parmi les bactéries corynéformes et les microcoques.

7. Procédé selon la revendication 1, dans lequel la flore de surface est constituée par l'association de *Geotrichum candidum,* de *Debaryomyces hansenii,* d'une ou plusieurs souches de corynébactéries,
**caractérisé en ce que** l'atmosphère est constituée de 9 à 11 %, avantageusement 9,5 à 10,5 % en volume d'O₂ et de 9 à 11 %, avantageusement 9,5 à 10,5 % en volume de CO₂.

8. Procédé selon la revendication 1, dans lequel la flore de surface est constituée par l'association de *Fusarium tabacinum,* de *Debaryomyces hansenii,* d'une ou plusieurs souches de corynébactéries et/ou microcoques, **caractérisé en ce que** l'atmosphère est constituée de 2 à 5 % en volume d'O₂ et de 19 à 21 %, de préférence 19,5 à 20,5 % en volume de CO₂.

9. Procédé selon la revendication 1, dans lequel la flore de surface est constituée par l'association de *Penicillium camemberti* et de *Deberyomyces hansenii,* d'une ou plusieurs souches de corynébactéries et/ou microcoques, **caractérisé en ce que** l'atmosphère est constituée de 5 à 10 % en volume d'O₂ et de 9 à 11 %, de préférence 9,5 à 10,5 % en volume de CO₂.

10. Système de conditionnement contenant un fromage ou une spécialité fromagère à croûte naturelle mixte obtenue par le développement d'une flore d'affinage constituée par l'association d'au moins deux microorganismes différents, l'un étant une bactérie choisie dans le groupe des bactéries corynéformes et des microcoques, l'autre étant choisi parmi les moisissures et les levures,
**caractérisé en ce qu'**il est constitué par une enceinte hermétiquement close comprenant sur tout ou partie de sa surface un matériau à perméabilité sélective assurant un flux gazeux avec l'atmosphère extérieure de manière à constituer et maintenir autour du fromage ou de la spécialité fromagère une atmosphère comprenant de 2 à 13 % en volume d'O₂ et de 7 à 20 % en volume de CO₂ pendant toute la durée de conservation du fromage ou de la spécialité fromagère.

11. Système de conditionnement selon la revendication 10, **caractérisé en ce que** l'enceinte est constituée en totalité d'un matériau à perméabilité sélective et consiste avantageusement en un sachet par thermoscellage après introduction du fromage.

12. Système de conditionnement selon la revendication 10, **caractérisé en ce que** l'enceinte est constituée en partie seulement d'un matériau à perméabilité sélective, l'autre partie étant constituée par un matériau imperméable aux gaz.

13. Système de conditionnement selon la revendication 12, **caractérisé en ce que** l'enceinte comprend une partie formant fond constituée par un matériau thermoplastique imperméable aux gaz et une partie formant couvercle, notamment un opercule ou une cloche en un matériau thermoplastique à perméabilité sélective.

14. Système de conditionnement selon la revendication 10, **caractérisé en ce que** le matériau à perméabilité sélective a une perméabilité à l'oxygène et à l'anhydride carbonique inférieure à 2 000 000 cm³/m²/24 heures/atm et supérieure à 5 000 cm³/m²/24 heures/atm mesurée à 25°C, de préférence comprise entre 5 000 et 200 000 cm³/m²/24 heures/atm, mesurée à 25°C.

15. Système de conditionnement selon la revendication 10, **caractérisé en ce que** le matériau à perméabilité sélective a une perméabilité à la vapeur d'eau inférieure à 800 g/m²/24 heures/atm et supérieure à 1 g/m²/24 heures/atm.

## Claims

1. Method of packaging cheeses or cheese specialities with a natural mixed crust obtained by the development of a maturing flora consisting of a combination of at least two different microorganisms, one being a bacterium selected from among the Coryneform and Micrococci bacteria, the other being selected from among the moulds and yeasts, **characterised in that** the cheese or the cheese speciality is placed in a hermetically sealed enclosure comprising over all or part of its surface a material of selective permeability ensuring a flow of gases with the outer atmosphere so as to establish and maintain an atmosphere comprising 2 to 13% by volume of O₂ and 7 to 20% by volume of CO₂ around the cheese or the cheese speciality, throughout the period of storage of the cheese or the cheese speciality.

2. Method according to claim 1, **characterised in that** the moulds are selected from among *Geotrichum, Penicillium, Fusarium* and *Cylindrocarpon.*

3. Method according to claim 2, **characterised in that** the moulds are selected from among the species *Penicillium camemberti, Geotrichum candidum, Fusarium tabacinum* and *Cylindrocarpon heteronema.*

4. Method according to one of claims 1 to 3, **characterised in that** the yeast is of the genus *Debaryomyces,* especially *Debaryomyces hansenii.*

5. Method according to one of claims 1 to 4, **characterised in that** the Corynebacterium is *Brevibacterium linens.*

6. Method according to one of claims 1 to 5, **characterised in that** one of the microorganisms constituting the flora is a yeast of the genus *Debaryomyces,* advantageously *Debaryomyces hansenii,* the other being selected from among the Coryneform and Micrococci bacteria.

7. Method according to claim 1, wherein the surface flora consists of a combination of *Geotrichum candidum, Debaryomyces hansenii* and one or more strains of Corynebacteria, **characterised in that** the atmosphere consists of 9 to 11%, advantageously 9.5 to 10.5% by volume of O₂ and 9 to 11%, advantageously 9.5 to 10.5% by volume of CO₂.

8. Method according to claim 1, wherein the surface flora consists of a combination of *Fusarium tabacinum, Debaryomyces hansenii* and one or more strains of Corynebacteria and/or Micrococci, **characterised in that** the atmosphere consists of 2 to 5% by volume of O₂ and 19 to 21%, preferably 19.5 to 20.5% by volume of CO₂.

9. Method according to claim 1, wherein the surface flora consists of a combination of *Penicillium camemberti* and *Debaryomyces hansenii* and one or more strains of Corynebacteria and/or Micrococci, **characterised in that** the atmosphere consists of 5 to 10% by volume of O₂ and 9 to 11%, preferably 9.5 to 10.5% by volume of CO₂.

10. Packaging system containing a cheese or a cheese speciality with a natural mixed rind obtained by the development of a maturing flora consisting of a combination of at least two different microorganisms, one being a bacterium selected from the group of coryneform bacteria and micrococci, the other being selected from amongst the moulds and the yeasts,
**characterised in that** it consists of a hermetically sealed enclosure comprising over all or part of its surface a material with a selective permeability ensuring a flow of gases with the outer atmosphere so as to establish and maintain, around the cheese or the cheese speciality, an atmosphere comprising 2 to 13% by volume of O₂ and 7 to 20% by volume of CO₂ throughout the period of storage of the cheese or the cheese speciality.

11. Packaging system according to claim 10, **characterised in that** the enclosure consists wholly of a material of selective permeability and advantageously consists of a bag which is heat-sealed after the cheese has been placed therein.

12. Packaging system according to claim 10, **characterised in that** the enclosure consists only partly of a material of selective permeability, the remainder consisting of a material which is impermeable to gases.

13. Packaging system according to claim 12, **characterised in that** the enclosure comprises a part forming the base consisting of a thermoplastic material which is impermeable to gases and a part forming the cover, notably a lid or cover made from a thermoplastic material of selective permeability.

14. Packaging system according to claim 10, **characterised in that** the material of selective permeability has a permeability to oxygen and carbon dioxide of less than 2, 000, 000 cm³/m²/24 hours/atm and greater than 5,000 cm³/m²/24 hours/atm measured at 25°C, preferably between 5,000 and 200,000 cm³/m²/24 hours/atm measured at 25°C.

15. Packaging system according to claim 10,
**characterised in that** the material of selective permeability has a permeability to water vapour of less than 800 g/m²/24 hours/atm and greater than 1 g/m²/24 hours/atm.

## Patentansprüche

1. Verfahren zum Verpacken von Käsen oder Käsespezialitäten mit gemischter Naturrinde, die durch Entwicklung einer Reifungsflora gewonnen wird, die durch Gemeinschaft wenigstens zweier verschiedener Mikroorganismen gebildet ist, wobei der eine Mikroorganismus eine Bakterie ist, die aus der Gruppe der coryneartigen Bakterien und der Mikrokokken gewählt ist, und der andere Mikroorganismus aus den Schimmelpilzen und Hefen gewählt ist, **dadurch gekennzeichnet, dass** der Käse bzw die Käsespezialität in einen hermetisch geschlossenen Behälter gelegt wird, der auf der Gesamtheit oder einem Teil seiner Oberfläche ein Material selektiver Durchlässigkeit aufweist, das einen Gasstrom bezüglich der äußeren Atmosphäre in der Weise sicherstellt, dass um den Käse bzw die Käsespezialität herum eine Atmosphäre gebildet und aufrechterhalten wird, die während der gesamten Lagerdauer des Käses bzw der Käsespezialität 2 bis 13 Volumprozent O₂ und 7 bis 20 Volumprozent CO₂ enthält.

2. Verfahren nach Anspruch 1, **dadurch gekennzeichnet, dass** die Schimmelpilze aus Geotrichum, Penicillium, Fusarium und Cylindrocarpon gewählt werden.

3. Verfahren nach Anspruch 2, **dadurch gekennzeichnet, dass** die Schimmelpilze aus den Arten Penicillium Camemberti, Geotrichum candidum, Fusarium tabacinum und Cylindrocarpon heteronema gewählt werden.

4. Verfahren nach einem der Ansprüche 1 bis 3, **dadurch gekennzeichnet, dass** die Hefe von der Gattung Debaryomyces, insbesondere Debaryomyces hansenii, ist.

5. Verfahren nach einem der Ansprüche 1 bis 4, **dadurch gekennzeichnet, dass** die Corynébakterie Brevibacterium linens ist.

6. Verfahren nach einem der Ansprüche 1 bis 5, **dadurch gekennzeichnet, dass** einer der Mikroorganismen, die die Flora bilden, eine Hefe der Gattung Debaryomyces, vorteilhaft Debaryomyces hansenii, ist und der andere Mikroorganismus aus den corynéartigen Bakterien und den Mikrokokken gewählt ist.

7. Verfahren nach Anspruch 1, bei dem die Oberflächenflora durch eine Gemeinschaft von Geotrichum candidum, Debaryomyces hansenii und eines oder mehrerer Stämme von Corynébakterien gebildet ist, **dadurch gekennzeichnet, dass** die Atmosphäre aus 9 bis 11 Volumprozent, vorteilhaft 9,5 bis 10,5 Volumprozent O₂ und 9 bis 11 Volumprozent, vorteilhaft 9,5 bis 10,5 Volumprozent CO₂ besteht.

8. Verfahren nach Anspruch 1, bei dem die Oberflächenflora durch eine Gemeinschaft von Fusarium tabacinum, Debaryomyces hansenii, eines oder mehrerer Stämme von Corynebakterien und/oder Mikrokokken gebildet ist, **dadurch gekennzeichnet, dass** die Atmosphäre aus 2 bis 5 Volumprozent O₂ und 19 bis 21 Volumprozent, vorzugsweise 19,5 bis 20,5 Volumprozent CO₂ besteht.

9. Verfahren nach Anspruch 1, bei dem die Oberflächenflora durch eine Gemeinschaft von Penicillium camemberti und Debaryomyces hansenii, eines oder mehrerer Stämme von Corynébakterien und/oder Mikrokokken gebildet ist, **dadurch gekennzeichnet, dass** die Atmosphäre aus 5 bis 10 Volumprozent O₂ und 9 bis 11 Volumprozent, vorzugsweise 9,5 bis 10,5 Volumprozent CO₂ besteht.

10. System zum Verpacken, das einen Käse oder eine Käsespezialität mit gemischter Naturrinde beinhaltet, die durch Entwicklung einer Reifungsflora gewonnen wird, die durch Gemeinschaft wenigstens zweier verschiedener Mikroorganismen gebildet ist, wobei das eine Bakterium aus der Gruppe von coryneartigen Bakterien und der Mikrokokken ausgewählt wird, das andere unter den Schimmelpilzen und den Hefen ausgewählt wird, , **dadurch gekennzeichnet, dass** das Verpackungssystem aus einem hermetisch geschlossenen Behälter besteht, der auf der Gesamtheit oder einem Teil seiner Oberfläche ein Material selektiver Durchlässigkeit aufweist, das einen Gasstrom bezüglich der äußeren Atmosphäre in der Weise sicherstellt, dass um den Käse bzw die Käsespezialität herum eine Atmosphäre gebildet und aufrechterhalten wird, die während der gesamten Lagerdauer des Käses bzw der Käsespezialität 2 bis 13 Volumprozent O₂ und 7 bis 20 Volumprozent CO₂ enthält.

11. Verpackungssystem nach Anspruch 10, **dadurch gekennzeichnet, dass** der Behälter zur Gänze aus einem Material selektiver Durchlässigkeit gebildet ist und vorteilhaft aus einem Säckchen besteht, das nach Einführung des Käses durch Thermoschweißung versiegelt wird.

12. Verpackungssystem nach Anspruch 10, **dadurch gekennzeichnet, dass** der Behälter nur zum Teil aus einem Material selektiver Durchlässigkeit gebildet ist und der andere Teil aus einem gasundurchlässigen Material besteht.

13. Verpackungssystem nach Anspruch 12, **dadurch gekennzeichnet, dass** der Behälter ein Teil, das einen Boden aus gasundurchlässigem thermoplastischen Material bildet, und ein Teil, das einen Deckel, insbesondere eine Deckelmembran oder eine Glocke, aus thermoplastischem Material selektiver Durchlässigkeit bildet, aufweist.

14. Verpackungssystem nach Anspruch 10, **dadurch gekennzeichnet, dass** das Material selektiver Durchlässigkeit eine Sauerstoff- und Kohlendioxiddurchlässigkeit von weniger als 2.000.000 cm³/m²/24h/atm und mehr als 5.000 cm³/m²/24h/atm, gemessen bei 25°C, vorzugsweise zwischen 5.000 und 200.000 cm³/m²/24h/atm, gemessen bei 25°C, besitzt.

15. Verpackungssystem nach Anspruch 10, **dadurch gekennzeichnet, dass** das Material selektiver Durchlässigkeit eine Durchlässigkeit für Wasserdampf von weniger als 800 g/m²/24h/atm und mehr als 1 g/m²/24h/atm besitzt.
